# FASCICULE DE BREVET EUROPEEN

(11) **EP 3 724 679 B1**
(45) Date de publication et mention de la délivrance du brevet: **20.12.2023**
(21) Numéro de dépôt: 18816084.0
(22) Date de dépôt: 14.12.2018
(51) Int. Cl.: G01S 13/86, F41H 11/136, G01V 3/10, G01V 3/12, G01V 3/17, G01S 13/88, H04B 5/00

(54) **DETECTEUR DOUBLE TECHNOLOGIE A BOBINES TRANSVERSES**
DOPPELDETEKTOR MIT QUERSPULEN
DUAL DETECTOR WITH TRANSVERSE COILS

(30) Priorité: 15.12.2017 FR 1762285
(43) Date de publication de la demande: 21.10.2020
(73) Titulaire: Manneschi, Alessandro, 52100 Arezzo (IT)
(72) Inventeur: Manneschi, Alessandro, 52100 Arezzo (IT)
(74) Mandataire: Regimbeau
(86) Numéro de dépôt international: PCT/EP2018/085063
(87) Numéro de publication internationale: WO 2019/115808

(56) Documents cités:
- EP-A1- 0 607 605
- WO-A1-2017/015730
- US-A1- 2006 091 888
- US-A1- 2008 036 644
- US-A1- 2013 113 648
- US-B1- 9 733 353

## Description

### DOMAINE DE L'INVENTION

L'invention concerne le domaine de la détection d'objets cibles, et plus particulièrement de la détection de charges explosives tels que des mines terrestres enfouies dans le sol.

### ARRIERE-PLAN TECHNOLOGIQUE

Afin de détecter des charges explosives, il est connu d'utiliser des détecteurs double technologies (« dual détecter » en anglais) comprenant une tête de détection logeant un capteur inductif et un radar à pénétration de sol, dans la mesure où ces technologies sont complémentaires quant aux types de matériaux détectés (métaux pour le capteur inductif vs. différences de constantes diélectriques des matériaux et position relative pour le radar).

A l'usage, le Demandeur s'est cependant aperçu du fait que le sol n'était pas neutre du point de vue électromagnétique et peut donc perturber le couplage entre les bobinages. En outre, le sol est rarement uniformément magnétique, de sorte que, pendant le balayage du sol avec le détecteur par un opérateur, le signal détecter peut ne varier qu'en raison de la présence de débris métalliques ou de la composition même du sol, voire même déclencher de fausses alarmes.

Par ailleurs, les opérateurs utilisant ces détecteurs peuvent être insuffisamment formés et ne pas tenir correctement le détecteur ou d'effectuer un mouvement de balayage inapproprié. La tête de détection peut alors former un angle latéral avec le sol, de sorte que l'une des bobines se trouve plus proche du sol que l'autre des bobines, ce qui crée une forte modulation du signal et risque donc de déclencher de fausses alarmes. Et quand bien même l'opérateur serait bien formé et essayerait de maintenir la tête de détection sensiblement parallèle au sol en tout point du mouvement de balayage, il ne peut modifier localement son inclinaison pour tenir compte des irrégularités du sol.

Afin de pallier ces difficultés, les fabricants ont tendance à réduire la sensibilité de ces détecteurs. Le risque cependant est de ne plus pouvoir détecter des cibles enfouies dans le sol et donc de mettre en péril la vie des opérateurs.

Les documents US 2008/036644, US 2006/091888, US9733353 et US 2013/113648 décrivent des détecteurs double technologie comprenant un capteur inductif et un radar à pénétration de sol. Les documents EP0607605 et WO 2017/015730 décrivent des détecteurs de métaux comprenant un capteur inductif.

### RESUME DE L'INVENTION

Un objectif de l'invention est donc de proposer un détecteur double technologie comprenant une tête de détection logeant un capteur inductif et un autre capteur, tel qu'un radar à pénétration de sol, qui soit capable de réduire les fausses alarmes susceptibles d'être générées lors du balayage d'un sol avec le détecteur tout présentant une sensibilité plus élevée.

Pour cela, l'invention propose un détecteur double technologie comprenant une tête de détection fixée sur un manche par l'intermédiaire d'une liaison mécanique, la tête de détection comportant :
- un boîtier comportant un couvercle, sur lequel est fixée la liaison mécanique, et un socle opposé au couvercle et configuré pour venir en regard d'un sol à sonder,
- un capteur inductif, monté fixement dans le boîtier,
- un radar à pénétration de sol, monté fixement dans le boîtier.

Le radar est positionné dans le boîtier de sorte à s'étendre entre le capteur inductif et le socle. Par ailleurs, le capteur inductif comprend une bobine émettrice et une bobine réceptrice distinctes formant chacune une boucle, et en ce que l'antenne émettrice est logée au centre de l'une parmi la bobine émettrice et la bobine réceptrice et l'antenne réceptrice est logée au centre de l'autre parmi la bobine émettrice et la bobine réceptrice.

Certaines caractéristiques préférées mais non limitatives du détecteur double technologie décrit ci-dessus sont les suivantes, prises individuellement ou en combinaison :
- une plus courte distance entre le radar et le socle est inférieure ou égale à un centimètre, de préférence entre environ entre environ un millimètre et environ cinq millimètres.
- une plus distance entre le capteur inductif et le socle est comprise entre environ 15 millimètres et environ 30 millimètres.
- le détecteur comprend en outre un adaptateur d'impédance connecté au radar.
- l'adaptateur d'impédance est logé dans le boîtier, entre le capteur inductif et le couvercle.
- la bobine émettrice et la bobine réceptrice sont distinctes et non concentriques.
- l'une au moins parmi la bobine émettrice et la bobine réceptrice est de forme allongée suivant une direction donnée, l'antenne émettrice et l'antenne réceptrice étant également de forme allongée suivant ladite direction de sorte à maximiser leur surface de rayonnement.
- à la fois la bobine émettrice et la bobine réceptrice sont de forme allongée suivant la direction donnée.
- la bobine émettrice et la bobine réceptrice sont homopolaires.
- la bobine émettrice et la bobine réceptrice comprennent des fils enroulés, la bobine émettrice présentant un plus grand nombre de spires que la bobine réceptrice.
- la bobine émettrice et la bobine réceptrice sont imprimées directement sur la plateforme, la plateforme formant alors un circuit imprimé.
- le radar comprend une antenne émettrice et une antenne réceptrice de l'un des types suivants : antenne radio à cornet à quadruple nervures, antenne papillon, antenne papillon rectangulaire, antenne spirale d'Archimède, antenne spirale logarithmique, antenne Vivaldi, antenne spirale logarithmique allongée.
- l'antenne émettrice et l'antenne réceptrice sont réalisées au moins en partie en nickel ou en chrome.
- une partie centrale de l'antenne émettrice et de l'antenne réceptrice est réalisée en cuivre et comprend, en surface, une couche de protection réalisée en or.
- l'antenne émettrice et l'antenne réceptrice présentent une épaisseur comprise entre cent nanomètres et un micron, par exemple égale à environ 200 nm.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

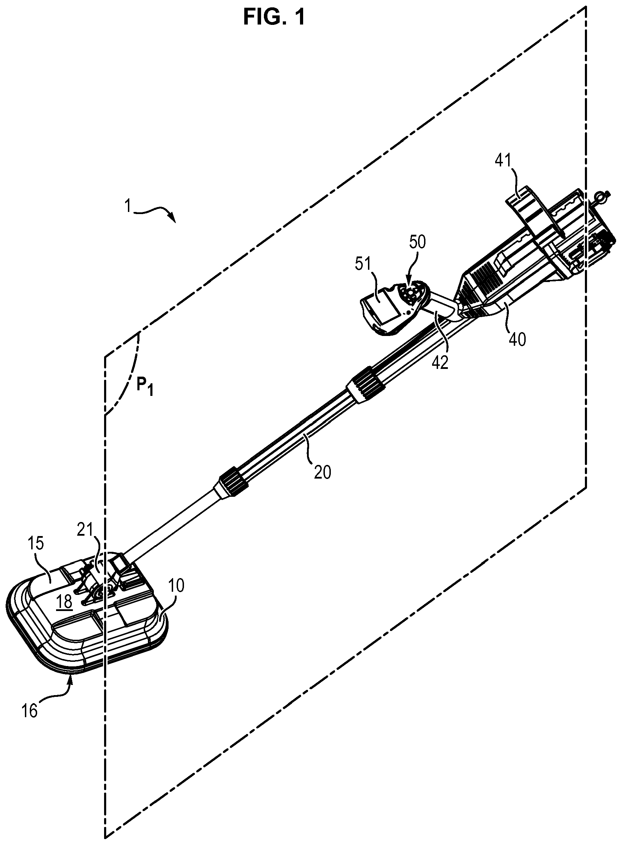

La figure 1 est une vue en perspective d'un exemple de réalisation d'un détecteur conforme à l'invention.
La figure 2 est une vue du dessus, éclatée et en perspective de la tête de détection du détecteur de la figure 1.
La figure 3 est une vue du dessous, éclatée et en perspective, de la tête de détection du détecteur de la figure 1.

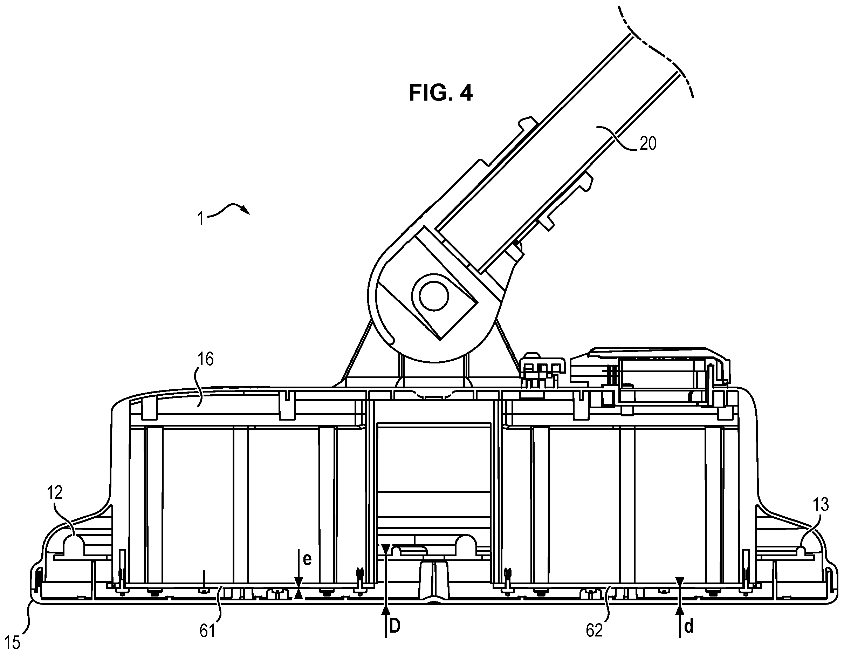

La figure 4 est une vue en coupe suivant le plan P1 de la tête de détection du détecteur de la figure 1.

### DESCRIPTION DETAILLEE D'UN MODE DE REALISATION

Un détecteur 1 double technologie conforme à l'invention comprend une tête de détection 10 fixée sur un manche 20 par l'intermédiaire d'une liaison mécanique 21.

La tête de détection 10 correspond à la partie destinée à venir près du sol afin de détecter des produits cibles. Elle comprend à cet effet :
- un boîtier 18 comportant un couvercle 15 sur lequel est fixée la liaison mécanique et un socle 16, opposé au couvercle 15 et configuré pour venir en regard d'un sol à sonder,
- un capteur inductif 12, 13, monté fixement dans le boîtier 18, et
- un radar à pénétration de sol 60, monté fixement dans le boîtier 18.

Par « monté fixement », on comprendra ici que, en conditions d'utilisation normales, le capteur inductif 12, 13 et le radar 60 sont immobiles par rapport au boîtier 18. Le capteur inductif 12, 13 et le radar 60 peuvent soit être démontés sans être endommagés, par exemple pour des opérations de maintenance, soit au contraire être fixés de manière définitive dans le boîtier 18.

Le capteur inductif 12, 13 comprend soit une bobine unique formant l'émetteur et le récepteur, soit une bobine émettrice 12 et une bobine réceptrice 13 distinctes. La bobine émettrice 12 et la bobine réceptrice forment alors chacune une boucle. Dans une forme de réalisation, la boucle de la bobine émettrice 12 et la boucle de la bobine réceptrice sont conformées de sorte que la boucle de la bobine émettrice 12 chevauche au moins partiellement la boucle de la bobine réceptrice 13 de manière à former une zone de couplage 14. Cette configuration permet d'obtenir un capteur inductif dans lequel l'inductance mutuelle est minimale.

A titre de comparaison, par rapport à un capteur inductif comprenant une unique bobine constituant l'émetteur et le récepteur et formée de deux boucles en série de sens inversés afin de neutraliser les effets de parasites externes, l'utilisation de deux bobines 12, 13 distinctes pour la bobine émettrice 12 et la bobine réceptrice 13 permet d'amplifier le signal, et ne nécessite donc pas de diminuer le seuil de détection pour éviter les risques de fausses alarmes.

Dans ce qui suit, l'invention sera plus particulièrement décrite dans le cas où le capteur inductif comprend une bobine émettrice 12 et une bobine réceptrice 13 distinctes. Ceci n'est cependant pas limitatif, l'invention s'appliquant également dans le cas d'un capteur inductif comprenant une unique bobine.

La bobine émettrice 12 et la bobine réceptrice 13 sont des bobinages homopolaires. De manière connue en soi, la bobine émettrice 12 et la bobine réceptrice 13 sont configurées pour émettre et recevoir des ondes ayant une fréquence comprise entre 300 Hz et 180 kHz.

Le radar à pénétration de sol 60 comprend une antenne émettrice 61 et une antenne réceptrice 62 configurées pour émettre et recevoir des ondes électromagnétiques dans le sol, par exemple à une fréquence comprise entre 100 MHz et 8 GHz. Lorsque ces ondes rencontrent des changements de milieux, une partie est renvoyée vers la surface et enregistrée par l'antenne réceptrice 62.

Afin d'optimiser le couplage entre le radar 60 et le sol, le radar 60 est positionné dans le boîtier 18 de sorte à s'étendre entre le capteur inductif 12, 13 et le socle 16. En effet, pour les fréquences élevées des ondes électromagnétiques émises et reçues par le radar 60 (1 GHz et plus), les longueurs d'onde correspondantes sont de l'ordre d'une dizaine de centimètres, de sorte que les ventres des ondes électromagnétiques se succèdent globalement tous les deux à cinq centimètres. Ainsi, en plaçant le radar 60 à proximité du socle 16, le radar 60 se trouve près du sol lors de son balayage par un opérateur et donc dans la position dans laquelle sa sensibilité est maximale.

En outre, en plaçant le capteur inductif 12, 13 à distance du socle 16, ce dernier est éloigné du sol lors du balayage, ce qui réduit sa sensibilité aux débris magnétiques présents sur le sol ou au sol magnétique. En effet, la cible étant plus grande que les débris, son signal diminue plus lentement lorsque le capteur inductif 11, 12 est éloigné. Le rapport entre l'amplitude du signal de la cible et l'amplitude du signal du débris est donc meilleur.

Enfin, cette configuration spatiale du capteur inductif 12, 13 et du radar 60 permet de mieux les découpler et de limiter voire d'éviter les risques d'interférence.

La position respective du radar 60 et du capteur inductif 12, 13 par rapport à le socle 16 assure ainsi un couplage optimal et permet, par conséquent, d'augmenter la sensibilité de détection du détecteur 1.

De préférence, le radar 60 est placé le plus proche possible du socle 16, voire en contact avec le socle 16. Par exemple, le radar 60 est positionné dans le boîtier 18 de sorte que la distance d la plus courte entre le radar 60 et le socle 16 soit inférieure à un centimètre, de préférence entre environ un millimètre et environ cinq millimètres (à 10% près).

L'antenne émettrice 61 et l'antenne réceptrice sont de préférence positionnées de manière à s'étendre parallèlement au sol lors de la détection. Une telle configuration spatiale permet en effet d'optimiser la détection de changements de milieux par le radar 60. Pour cela, l'antenne émettrice 61 et l'antenne réceptrice 62 sont de préférence placées dans le boîtier 18 de sorte à s'étendre dans un plan qui est parallèle au socle 16 du boîtier 18. La plus courte distance entre le radar 60 et le socle 16 du boîtier 18 est donc égale à l'épaisseur de la lame d'air les séparant.

Le capteur inductif 12, 13 peut être placé à proximité du couvercle 15, et notamment de la partie du couvercle 15 qui comporte la liaison mécanique, afin d'éloigner le capteur inductif 12, 13 du sol lors de l'utilisation du détecteur 1. Par exemple, le capteur inductif 12, 13 peut être placé à une distance D de quelques centimètres du socle 16, typiquement entre environ quinze millimètres et environ trente millimètre (à 10% près).

Les circuits du détecteur 1 ayant une résistance électrique élevée (c'est-à-dire de l'ordre d'une cinquantaine d'Ohm), le détecteur 1 comprend en outre un adaptateur d'impédance 30 connecté aux antennes émettrice 61 et réceptrice 62. De préférence, l'adaptateur d'impédance 30 est relié à une partie centrale de chaque antenne 61, 62.

L'adaptateur d'impédance 30 peut notamment être logé dans le boîtier 18, entre le couvercle 15 et le capteur inductif 12, 13.

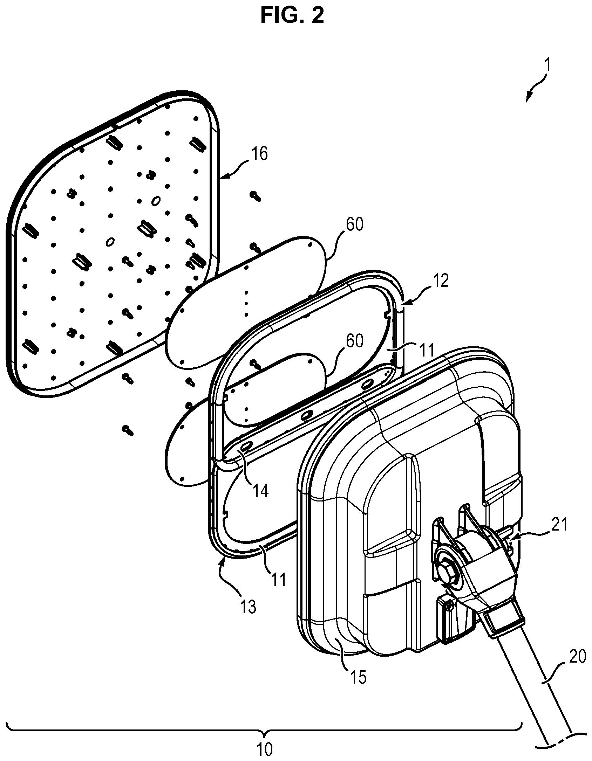

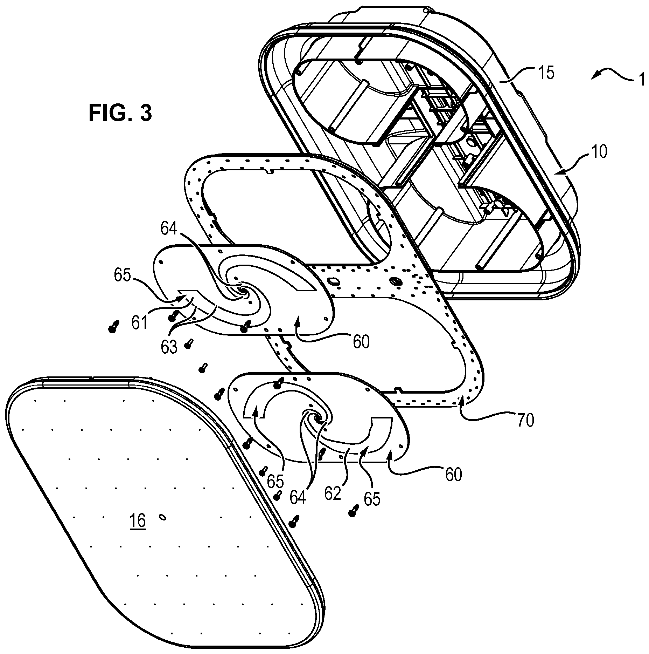

Dans une première forme de réalisation, la bobine émettrice 12 et la bobine réceptrice 13 sont imprimées directement sur la face de la plateforme 11. La plateforme 11 et les bobines émettrice et réceptrice 12, 13 forment donc un circuit imprimé. Cette forme de réalisation présente l'avantage de réduire l'encombrement du capteur inductif dans la tête de détection 10 ainsi que le poids global du détecteur 1. Son coût n'est cependant pas négligeable. Par conséquent, dans une deuxième forme de réalisation, qui est illustrée sur les figures 2 et 3, la bobine émettrice 12 et la bobine réceptrice 13 peuvent comprendre des fils enroulés, la bobine émettrice 12 présentant un plus grand nombre de spires que la bobine réceptrice 13.

La liaison mécanique 21 peut comprendre une liaison du type encastrement, pivot ou rotule. De préférence, comme illustré sur les figures, la liaison mécanique 21 comprend un pivot.

De manière optionnelle, le détecteur 1 comprend en outre des moyens 40 pour la préhension du détecteur 1 par un opérateur. De manière habituelle, les moyens de préhension 40 peuvent comprendre un arceau 41 configuré pour recevoir à coulissement le bras de l'opérateur ainsi qu'une poignée 42 configurée pour être saisie par l'opérateur.

Le manche 20 peut être télescopique et/ou comprendre plusieurs parties distinctes configurées pour être assemblées les unes avec les autres avant d'être fixées ensemble, par exemple par vissage.

De manière connue en soi, le détecteur 1 comprend également des moyens de traitement 50 comprenant notamment un microprocesseur configuré pour traiter le signal détecté par le capteur inductif 12, 13, tel qu'une ou plusieurs cartes électroniques, une mémoire et le cas échéant des moyens d'alerte et/ou un dispositif d'affichage 51.

Les moyens de traitement 50 peuvent être logés en tout ou partie au niveau des moyens de préhension 40.

Les boucles de la bobine émettrice 12 et de la bobine réceptrice 13 peuvent être de forme allongée, c'est-à-dire qu'elles présentent une dimension dans le plan de la plateforme 11 qui est plus grande devant l'autre dimension. Lorsque l'antenne émettrice 61 et l'antenne réceptrice 62 sont chacune logées au centre de l'une des boucles des bobines émettrice 12 et réceptrice 13, les antennes 61, 62 émettrice et réceptrice 12, 13 sont alors également de forme allongée suivant la plus grande dimension des boucles des bobines émettrice 12 et réceptrice 13 afin de maximiser leur surface de rayonnement et donc leur capacité de transmission. Par exemple, l'antenne émettrice 61 et l'antenne réceptrice 62 peuvent avoir la forme d'une spirale logarithmique qui a été allongée afin de maximiser la surface de rayonnement et le gain des antennes tout en minimisant la longueur de chaque brin 63 formant la spirale des antennes 61, 62 afin de ne pas augmenter l'impulsion. Dans une antenne à spirale logarithmique allongée, l'écartement entre les brins 63 de la spirale est en effet plus grand et croit de manière logarithmique. Par exemple, la spirale logarithmique allongée formant les antennes 61, 62 peut présenter une hauteur d'environ 150 cm pour 80 cm. En variante, l'antenne émettrice 61 et l'antenne réceptrice 62 du radar 60 peuvent être de l'un des types suivants : antenne radio à cornet à quadruple nervures, antenne papillon (généralement connue sous sa dénomination anglaise « bow tie »), antenne papillon rectangulaire, antenne spirale d'Archimède, antenne spirale logarithmique, antenne Vivaldi.

De manière connue en soi, l'antenne émettrice 61 et l'antenne réceptrice 62 peuvent être réalisées en cuivre, qui est un bon conducteur électrique.

Toutefois, afin réduire les risques d'oxydation des antennes, les antennes 61, 62 émettrice et réceptrice 12, 13 peuvent être en partie réalisées en nickel et/ou en chrome et en partie réalisées en cuivre. Le nickel et le chrome présentent en effet l'avantage de ne pas s'oxyder dans le temps tout en étant conducteur électriquement.

Par exemple, le centre 64 de chaque antenne 61, 62 peut être réalisé en cuivre et protégé par une couche comprenant de l'or, tandis que le reste 65 des antennes 61, 26 est réalisé en nickel et/ou en chrome. La zone s'étendant entre le centre 64 de chaque antenne 61, 62 et le reste de l'antenne 61, 62 peut être réalisée en cuivre et recouverte d'une couche de nickel (et/ou de chrome).

Par ailleurs, afin de limiter les interactions avec les bobines émettrice et réceptrice 12, 13, une épaisseur de l'antenne émettrice 61 et de l'antenne réceptrice 62 est inférieure à l'effet de peau des bobines 12, 13. De la sorte, les antennes 61, 62 deviennent invisibles pour le champ magnétique du capteur inductif. On notera toutefois que l'épaisseur des antennes émettrice et réceptrice 12, 13 doit rester supérieure à une épaisseur limite pour garantir une robustesse mécanique suffisante des antennes 61, 62 et éviter tout risque de casse. L'épaisseur des antennes émettrice et réceptrice 61, 62 est donc choisie de manière à être comprise entre une centaine de nanomètres et un micron. Par exemple, l'antenne émettrice 61 et l'antenne réceptrice 62 peuvent présenter une épaisseur de l'ordre de 200 nm (à 10% près).

Afin de réaliser des antennes 61, 62 de cette épaisseur, on pourra notamment envisager une technique de dépôt physique par phase vapeur (habituellement désignée par son acronyme anglais PVD pour Physical Vapor Déposition). Cette technique permet en effet d'obtenir des antennes 61, 62 de très faible épaisseur avec une grande précision dimensionnelle et de réaliser plusieurs antennes à la fois.

## Revendications

1. Détecteur (1) double technologie comprenant une tête de détection fixée sur un manche par l'intermédiaire d'une liaison mécanique, la tête de détection comportant :
- un boîtier (18) comportant un couvercle (16), sur lequel est fixée la liaison mécanique, et un socle (15) opposé au couvercle (16) et configuré pour venir en regard d'un sol à sonder,
- un capteur inductif, monté fixement dans le boîtier (18),
- un radar à pénétration de sol (60), monté fixement dans le boîtier (18), le radar (60) étant positionné dans le boîtier (18) de sorte à s'étendre entre le capteur inductif (12, 13) et le socle (15)
le détecteur étant **caractérisé en ce que** le capteur inductif (13) comprend une bobine émettrice (12) et une bobine réceptrice (13) distinctes formant chacune une boucle, et **en ce que** l'antenne émettrice (61) est logée au centre de l'une parmi la bobine émettrice (12) et la bobine réceptrice (13) et l'antenne réceptrice (62) est logée au centre de l'autre parmi la bobine émettrice (12) et la bobine réceptrice (13).

2. Détecteur selon la revendication 1, dans lequel une plus courte distance (d) entre le radar (60) et le socle (15) est inférieure ou égale à un centimètre, de préférence entre environ entre environ un millimètre et environ cinq millimètres.

3. Détecteur selon la revendication 1, dans lequel une plus distance (D) entre le capteur inductif (12, 13) et le socle (15) est comprise entre environ 15 millimètres et environ 30 millimètres.

4. Détecteur selon l'une des revendication 1 à 3, comprenant en outre un adaptateur d'impédance connecté au radar.

5. Détecteur selon la revendication 4, dans lequel l'adaptateur d'impédance est logé dans le boîtier (18), entre le capteur inductif (12, 13) et le couvercle (16).

6. Détecteur selon l'une des revendications 1 à 5, dans lequel la bobine émettrice (12) et la bobine réceptrice (13) sont distinctes et non concentriques.

7. Détecteur selon l'une des revendications 1 à 6, dans lequel l'une au moins parmi la bobine émettrice (12) et la bobine réceptrice (13) est de forme allongée suivant une direction donnée, l'antenne émettrice et l'antenne réceptrice (61, 62) étant également de forme allongée suivant ladite direction de sorte à maximiser leur surface de rayonnement.

8. Détecteur selon l'une des revendications 1 à 6, dans lequel à la fois la bobine émettrice (12) et la bobine réceptrice (13) sont de forme allongée suivant la direction donnée.

9. Détecteur selon l'une des revendications 1 à 8, dans lequel la bobine émettrice (12) et la bobine réceptrice (13) sont homopolaires.

10. Détecteur selon l'une des revendications 1 à 9, dans lequel la bobine émettrice (12) et la bobine réceptrice (13) comprennent des fils enroulés, la bobine émettrice (12) présentant un plus grand nombre de spires que la bobine réceptrice (13).

11. Détecteur (1) selon l'une des revendications 1 à 10, dans lequel la bobine émettrice (12) et la bobine réceptrice (13) sont imprimées directement sur la plateforme (11), la plateforme (11) formant alors un circuit imprimé.

12. Détecteur (1) selon l'une des revendications 1 à 11, dans lequel le radar (60) comprend une antenne émettrice (61) et une antenne réceptrice (62) de l'un des types suivants : antenne radio à cornet à quadruple nervures, antenne papillon, antenne papillon rectangulaire, antenne spirale d'Archimède, antenne spirale logarithmique, antenne Vivaldi, antenne spirale logarithmique allongée.

13. Détecteur (1) selon la revendication 10, dans lequel l'antenne émettrice (61) et l'antenne réceptrice (62) sont réalisées au moins en partie en nickel ou en chrome.

14. Détecteur (1) selon la revendication 13, dans lequel une partie centrale de l'antenne émettrice (61) et de l'antenne réceptrice (62) est réalisée en cuivre et comprend, en surface, une couche de protection réalisée en or.

15. Détecteur (1) selon l'une des revendications 12 à 14, dans lequel l'antenne émettrice (61) et l'antenne réceptrice (62) présentent une épaisseur comprise entre cent nanomètres et un micron, par exemple égale à environ 200 nm.

## Patentansprüche

1. Dualtechnologie-Detektor (1) mit einem Detektorkopf, der über eine mechanische Verbindung an einem Stiel befestigt ist, wobei der Detektorkopf Folgendes umfasst: :
- ein Gehäuse (18) mit einem Deckel (16), an dem die mechanische Verbindung befestigt ist, und einem Sockel (15), der dem Deckel (16) gegenüberliegt und so gestaltet ist, dass er einem zu untersuchenden Boden gegenüberliegt,
- einen induktiven Sensor, der fest in das Gehäuse (18) eingebaut ist,
- ein Bodendurchdringungsradar (60), das fest in dem Gehäuse (18) angebracht ist, wobei das Radar (60) in dem Gehäuse (18) so positioniert ist, dass es sich zwischen dem induktiven Sensor (12, 13) und dem Sockel (15) erstreckt
wobei der Detektor **dadurch gekennzeichnet ist, dass** der induktive Sensor (13) eine getrennte Sendespule (12) und eine Empfangsspule (13) umfasst, die jeweils eine Schleife bilden, und dass die Sendeantenne (61) in der Mitte einer der Sendespule (12) und der Empfangsspule (13) untergebracht ist und die Empfangsantenne (62) in der Mitte der anderen der Sendespule (12) und der Empfangsspule (13) untergebracht ist.

2. Detektor nach Anspruch 1, wobei ein kürzester Abstand (d) zwischen dem Radar (60) und dem Sockel (15) kleiner oder gleich einem Zentimeter ist, vorzugsweise zwischen etwa zwischen etwa einem Millimeter und etwa fünf Millimetern.

3. Sensor nach Anspruch 1, wobei ein Abstand (D) zwischen dem induktiven Sensor (12, 13) und dem Sockel (15) zwischen etwa 15 Millimetern und etwa 30 Millimetern liegt.

4. Detektor nach einem der Ansprüche 1 bis 3, der außerdem einen Impedanzadapter umfasst, der mit dem Radar verbunden ist.

5. Detektor nach Anspruch 4, wobei der Impedanzadapter im Gehäuse (18) zwischen dem induktiven Sensor (12, 13) und dem Deckel (16) untergebracht ist.

6. Detektor nach einem der Ansprüche 1 bis 5, wobei die Sendespule (12) und die Empfangsspule (13) getrennt und nicht konzentrisch sind.

7. Detektor nach einem der Ansprüche 1 bis 6, bei dem mindestens eine von der Sendespule (12) und der Empfangsspule (13) entlang einer gegebenen Richtung länglich ist, wobei die Sende- und die Empfangsantenne (61, 62) ebenfalls entlang dieser Richtung länglich sind, so dass ihre Strahlungsfläche maximiert wird.

8. Detektor nach einem der Ansprüche 1 bis 6, wobei sowohl die Sendespule (12) als auch die Empfangsspule (13) in der gegebenen Richtung langgestreckt sind.

9. Detektor nach einem der Ansprüche 1 bis 8, wobei die Sendespule (12) und die Empfangsspule (13) homopolar sind.

10. Detektor nach einem der Ansprüche 1 bis 9, wobei die Sendespule (12) und die Empfangsspule (13) gewickelte Drähte umfassen, wobei die Sendespule (12) eine größere Anzahl an Windungen aufweist als die Empfangsspule (13).

11. Detektor (1) nach einem der Ansprüche 1 bis 10, wobei die Sendespule (12) und die Empfangsspule (13) direkt auf die Plattform (11) gedruckt sind, wobei die Plattform (11) dann eine gedruckte Schaltung bildet.

12. Detektor (1) nach einem der Ansprüche 1 bis 11, wobei das Radar (60) eine Sendeantenne (61) und eine Empfangsantenne (62) von einem der folgenden Typen umfasst: vierfach gerippte Hornfunkantenne, Schmetterlingsantenne, rechteckige Schmetterlingsantenne, Archimedische Spiralantenne, logarithmische Spiralantenne, Vivaldi-Antenne, verlängerte logarithmische Spiralantenne.

13. Detektor (1) nach Anspruch 10, wobei die Sendeantenne (61) und die Empfangsantenne (62) zumindest teilweise aus Nickel oder Chrom gefertigt sind.

14. Detektor (1) nach Anspruch 13, wobei ein zentraler Teil der Sendeantenne (61) und der Empfangsantenne (62) aus Kupfer hergestellt ist und an der Oberfläche eine Schutzschicht aufweist, die aus Gold hergestellt ist.

15. Detektor (1) nach einem der Ansprüche 12 bis 14, wobei die Sendeantenne (61) und die Empfangsantenne (62) eine Dicke zwischen hundert Nanometern und einem Mikron aufweisen, beispielsweise gleich etwa 200 nm.

## Claims

1. Dual-technology sensor (1) comprising a sensor head attached to a handle by means of a mechanical connection, the sensor head comprising :
- a housing (18) comprising a cover (16), to which the mechanical link is fixed, and a base (15) opposite the cover (16) and configured to face a floor to be inspected,
- an inductive sensor, fixedly mounted in the housing (18),
- a ground-penetrating radar (60), fixedly mounted in the housing (18), the radar (60) being positioned in the housing (18) so as to extend between the inductive sensor (12, 13) and the base (15)
the detector being **characterized in that** the inductive sensor (13) comprises separate transmitting coil (12) and receiving coil (13) distinct from each other, each forming a loop, and **in that** the transmitting antenna (61) is housed in the center of one of the transmitting coil (12) and receiving coil (13) and the receiving antenna (62) is housed in the center of the other of the transmitting coil (12) and receiving coil (13).

2. Detector according to claim 1, wherein a shorter distance (d) between the radar (60) and the base (15) is less than or equal to one centimeter, preferably between about one millimeter and about five millimeters.

3. Detector according to claim 1, wherein a distance (D) between the inductive sensor (12, 13) and the base (15) is between about 15 millimeters and about 30 millimeters.

4. Detector according to any of claims 1 to 3, further comprising an impedance adapter connected to the radar.

5. Detector according to claim 4, wherein the impedance adapter is housed in the casing (18), between the inductive sensor (12, 13) and the cover (16).

6. Detector according to one of claims 1 to 5, wherein the transmitting coil (12) and the receiving coil (13) are distinct and not concentric.

7. A detector according to one of claims 1 to 6, wherein at least one of the transmitting coil (12) and the receiving coil (13) is elongate in a given direction, the transmitting and receiving antennas (61, 62) also being elongate in said direction so as to maximize their radiating area.

8. A detector according to one of claims 1 to 6, wherein both the transmitting coil (12) and the receiving coil (13) are elongate in the given direction.

9. Detector according to one of claims 1 to 8, wherein the transmitting coil (12) and the receiving coil (13) are homopolar.

10. Detector according to one of claims 1 to 9, wherein the transmitting coil (12) and the receiving coil (13) comprise wound wires, the transmitting coil (12) having a greater number of turns than the receiving coil (13).

11. Detector (1) according to one of claims 1 to 10, wherein the transmitter coil (12) and the receiver coil (13) are printed directly on the platform (11), the platform (11) thus forming a printed circuit.

12. Detector (1) according to one of claims 1 to 11, wherein the radar (60) comprises a transmitting antenna (61) and a receiving antenna (62) of one of the following types: quadruple-ribbed horn radio antenna, butterfly antenna, rectangular butterfly antenna, Archimedean spiral antenna, logarithmic spiral antenna, Vivaldi antenna, elongated logarithmic spiral antenna.

13. Detector (1) according to claim 10, wherein the transmitting antenna (61) and the receiving antenna (62) are made at least in part of nickel or chromium.

14. Detector (1) according to claim 13, wherein a central part of the transmitting antenna (61) and of the receiving antenna (62) is made of copper and comprises, on the surface, a protective layer made of gold.

15. Detector (1) according to one of claims 12 to 14, wherein the transmitting antenna (61) and the receiving antenna (62) have a thickness of between one hundred nanometers and one micron, for example equal to approximately 200 nm.
